# EUROPEAN PATENT SPECIFICATION

(11) **EP 0 354 964 B1**
(45) Date of publication and mention of the grant of the patent: **17.05.1995**
(21) Application number: 89900897.3
(22) Date of filing: 23.12.1988
(51) Int. Cl.: H04N 7/00, H04N 7/08

(54) **TELETEXT RECEIVER**
TELETEXT-EMPFÄNGERVORRICHTUNG
RECEPTEUR DE TELETEXTE

(30) Priority: 25.12.1987 JP 3307/86
(43) Date of publication of application: 21.02.1990
(73) Proprietor: MATSUSHITA ELECTRIC INDUSTRIAL CO., LTD., Kadoma-shi, Osaka-fu, 571 (JP)
(72) Inventor: KAWAKAMI, Toshikatsu, Mishima-gun Osaka-fu 618 (JP); FUKUDA, Shin, Hirakata-shi Osaka-fu 573 (JP); SHINBO, Hiroyasu, Toyonaka-shi Osaka-fu 565 (JP); SAKAMOTO, Ken, Takatsuki-shi Osaka-fu 569 (JP)
(74) Representative: Patentanwälte Leinweber & Zimmermann
(86) International application number: JP8801314
(87) International publication number: WO8906466

(56) References cited:
- EP-A- 0 009 662
- GB-A- 2 171 279
- JP-A- 5 844 871
- JP-A-61 278 884
- US-A- 4 633 297
- IBM TECHNICAL DISCLOSURE BULLETIN, vol. 23, no. 7A, December 1980, pages 2976-2977, New York, US; P.A. SHEPPARD: "Display with dynamically variable character size"
- N.H.K. LABORATORIES NOTES, no. 291, October 1983, pages 1-19, Tokyo, JP; A.YANAGIMACHI et al.: "An experimental second-generation Japanese telext system"
- IDEM

## Description

The present invention relates to a character multiplexed broadcasting receiving apparatus in which when a received picture plane of a character multiplexed broadcasting is reduced and displayed, the reduced characters can be efficiently read out.

In recent years, the character broadcasting which is called new media and has been put into practical use is also gradually widely spread. Various kinds of additional functions are being examined spread the character broadcasting.

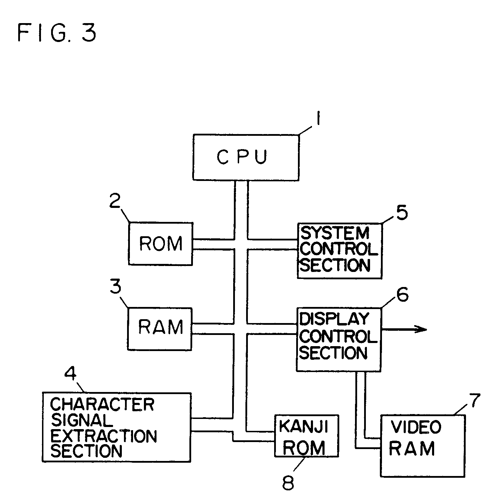

Fig. 3 shows a schematic block of a character multiplexed signal receiving decoder (hereinafter, decoder) as known from NHK LABORATORIES NOTE, no. 291, "An experimental second-generation Japanese teletext system". In the diagram, reference numeral 1 denotes a central processing unit (CPU) for various kinds of processes of the decoder. Reference numeral 2 indicates a ROM in which programs to execute such processing procedures are stored and 3 represents a work RAM of the CPU 1. Reference numeral 4 denotes a character signal extracting section for extracting a character signal from a video signal and supplying to the CPU 1. Reference numeral 5 denotes a system control section for generating various kinds of signals which are necessary to control each block and 6 indicates a display control section for executing the storing, reading, and outputting operations for a video RAM 7 in accordance with the received character signal. Reference numeral 8 indicates a Chinese character (Kanji) ROM in which a character font (pattern) which has been encoded and designated in a character signal is stored. When the CPU 1 gives a code as an address to the Kanji ROM 8 in accordance with a predetermined code system (JIS), pattern signal of the character corresponding to the code is output from the Kanji ROM 8. The readout pattern signal of one picture plane is written into the video RAM 7 and is then read out synchrcnously with the scan of the screen of a cathode ray tube, so that the character is displayed on the screen of the cathode ray tube.

The reading operation of the Kanji ROM 8 will now be described.

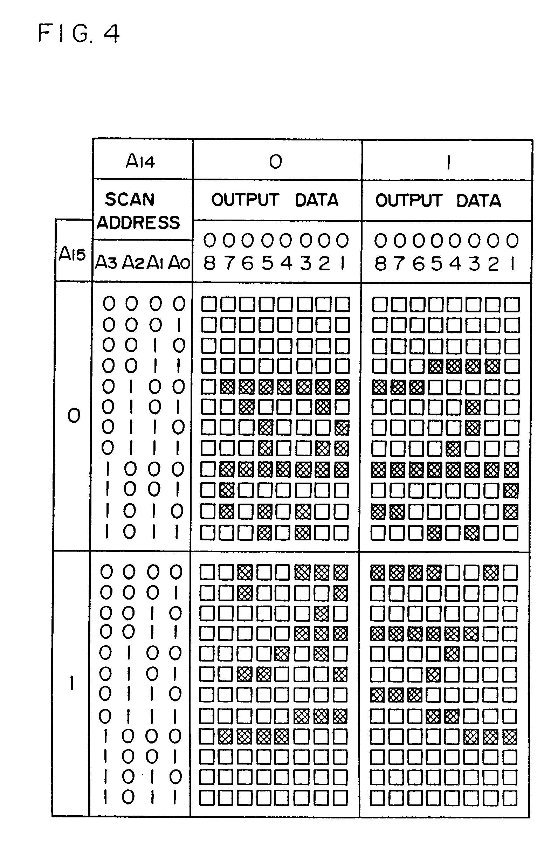

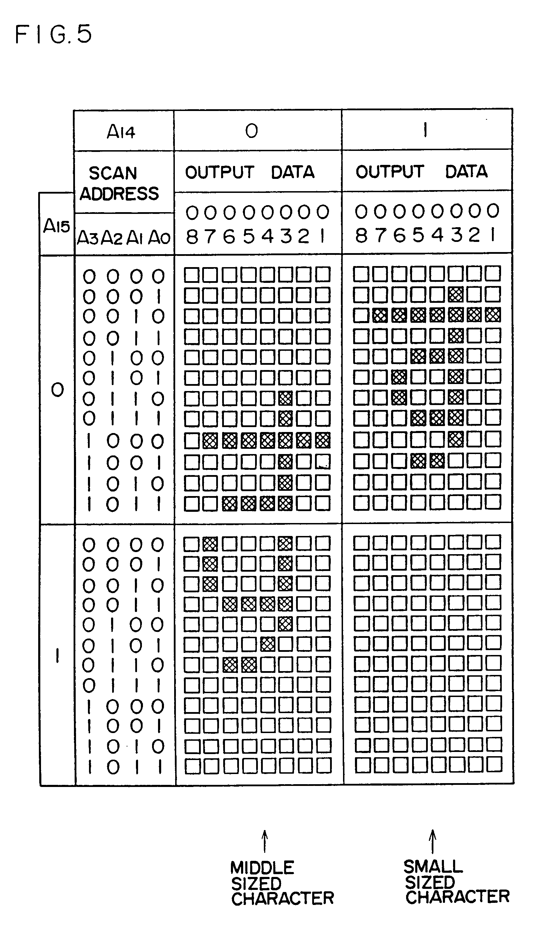

Patterns in the Kanji ROM are stored as shown in Figs. 4 and 5. In the character multiplexed broadcasting, the character pattern has the resolution of 16 dots x 24 dots. Bytes of zone and point are assigned for every code (which is specified by JIS C-6226) and every character which are sent. Actually, the character pattern is designated by 14 bits of respective byte. Characters include three kinds of a standard character (NSZ) of 16 x 24, a middle sized character (MSZ) of 8 x 24, and a small sized character (SSZ) of 8 x 12. The pattern signal of the character is divided into four quadrants and stored. The NSZ exists in the first to fourth quadrants, the MSZ exists in the first and third quadrants, and the SSZ exists in the second quadrant in accordance with the character size and they are stored. As mentioned above, since the storing positions, that is, the reading positions differ depending on the size, it is also necessary to select the reading positions in accordance with the size of character upon reading.

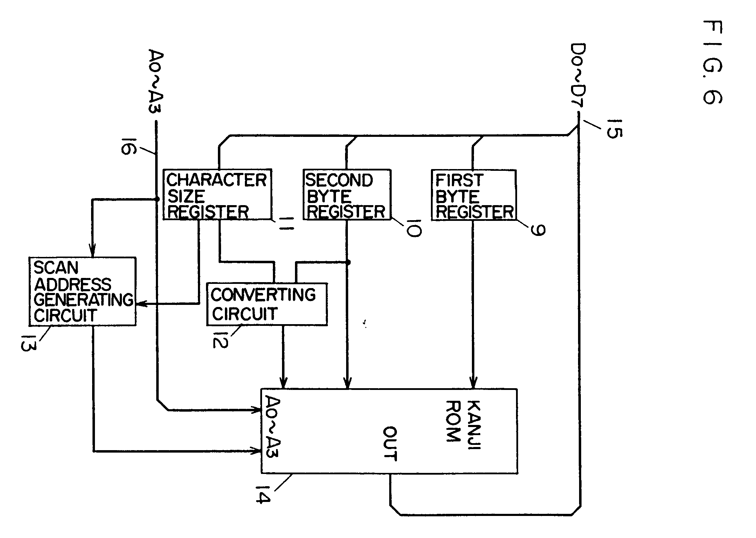

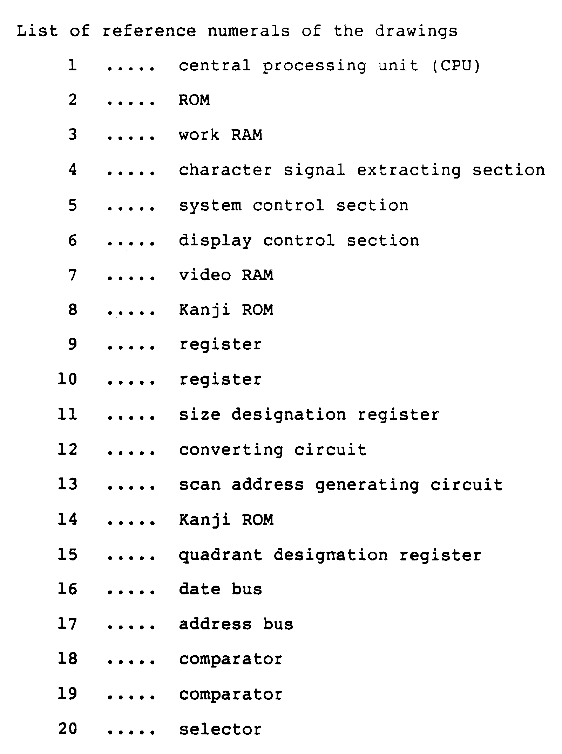

Fig. 6 is a circuit to read out a pattern from the Kanji ROM. Reference numeral 9 denotes a register to set the first byte (zone) of the Kanji code and 10 also indicates a register to set the second byte (point). Reference numeral 11 denotes a size designation register to designate the character size or quadrant and 12 indicates a converting circuit to perform the conversion on the basis of the information designated by the size designation register 11 since the storage positions differ depending on the size even in the case of the same Kanji code.

Reference numeral 13 denotes a scan address generating circuit for automatically counting clock pulses when the CPU 1 reads out the pattern after the above parameters were set and for generating addresses of "0" to "11" (decimal notation) in each quadrant. The circuits for reading the pattern from the ROM can be also constructed so as to automatically change the quadrant in accordance with the character size.

That is, it is sufficient that the carry is executed when a counter output of the scan address generating circuit 13 advances until "11", and the address to designate the quadrant is increased by only "1".

Reference numeral 14 indicates a Kanji ROM. At present, a memory of 4M bits of one chip is used but a memory of 3M bits is actually used as a Kanji ROM 14.

For operation, after the first and second bytes and size of the Kanji code were designated by the CPU 1, by executing the reading operations twelve times, the pattern signal of one quadrant can be read out. Since the quadrant automatically changes, the pattern signals of one character are obtained, respectively, by continuously reading out the NSZ 48 times, the MSZ 24 times, and the SSZ 12 times.

The operation of the decoder constructed as mentioned above will be simply described hereinbelow.

In the character signals extracted from the video signal by the character signal extracting section 4, if the figure information has already been compressed or the like by the processes of the CPU 1, they are expanded and, thereafter, they are input to the display control section 6. On the other hand, for the encoded character information, the Kanji ROM 8 is accessed in accordance with the code and the readout pattern is input to the display control section 6. The display control section 6 stores those information into the video RAM 7 in accordance with the inputs. The display control section 6 simultaneously reads out the display data from the video RAM 7 and outputs as R, G, and B signals.

The above operations are the ordinary operations. As an additional function, there is considered what is called a picture in picture mode for reducing a character picture plane and synthesizing on an ordinary television picture plane and displaying. For instance, in such a mode, the ordinary picture plane comprising 248 dots in the lateral direction and 204 lines in the vertical lines is reduced into the screen comprising 124 dots x 102 lines (each of which is 1/2 of that of the ordinary screen) which size is 1/4 of the ordinary screen and is displayed. If the ordinary television picture plane is displayed as a main picture plane and the character picture plane is displayed at the corner of the television picture plane by the 1/4 size, both of them can be simultaneously seen. On the other hand, if a picture plane which the user wants to see in detail comes, it can be immediately exchanged, so that it is convenient.

As such means for reducing the picture plane into 1/4, there is considered a method whereby the ordinary picture plane is once stored into the video RAM 7 and is reduced into 1/4 by the software and read out, that is, it is reduced by a predetermined algorithm.

However, with such a method, there is a case where the reduced character becomes dim, so that it cannot be read. Although the figure information can be relatively easily discriminated, there occurs a case where the character information cannot be discriminated. Thus, there is a problem of inconvenience because there is a possibility such that the character information is interpreted to another meaning.

In consideration of the above problems, it is an object of the present invention to provide a character multiplexed broadcasting receiving apparatus in which even in the reduction display mode of character information, the character which is easy to read can be displayed by using the same ROM as that of the character of the inherent size by a simple construction.

IBM TECHNICAL DISCLOSURE BULLETIN, volume 23, no. 7A, "Display with Dynamically Variable Character Size" describes to provide two separate character generators each having a separate memory for storing character patterns of different sizes.

### DISCLOSURE OF THE INVENTION

According to the invention, the above object is achieved by a character multiplexed broadcasting receiving apparatus according to claim 1. A preferred embodiment is claimed in claim 2.

In other words, according to character multiplexed broadcasting receiving apparatus of the present invention, a pattern signal of an ordinary character and a pattern signal of the character which is obtained by deforming and reducing so as to be easily read are stored into an ROM, the reduction pattern signal is arranged in a gap memory area of the ordinary pattern at the storage position which is designated by the same code as that of the conventional ordinary pattern signal, and the reduction pattern signal can be read out by designating it by the same code as that of the ordinary character pattern.

According to the invention, with the above construction, even if the additional function for the reduction display is provided, by arranging in the gap in the Kanji ROM, it is possible to substantially cope with such an additional function by the algorithm in a software manner as in the conventional manner. On the other hand, the same shall also apply to the case of the hardware. The invention can be relatively simply realized.

Fig. 1 is a diagrammatical view showing an example of storage of character patterns of a character multiplexed broadcasting receiving apparatus in an embodiment of the present invention; Fig. 2 is a block diagram of a character pattern reading circuit in the embodiment; Fig. 3 is a fundamental block diagram of a character multiplexed receiving apparatus in the embodiment; Figs. 4 and 5 are diagrammatical views showing an example of storage of character patterns in a conventional example; and Fig. 6 is a reading circuit block diagram in a conventional example of character patterns.

An embodiment of the present invention will be described hereinbelow with reference to the drawings.

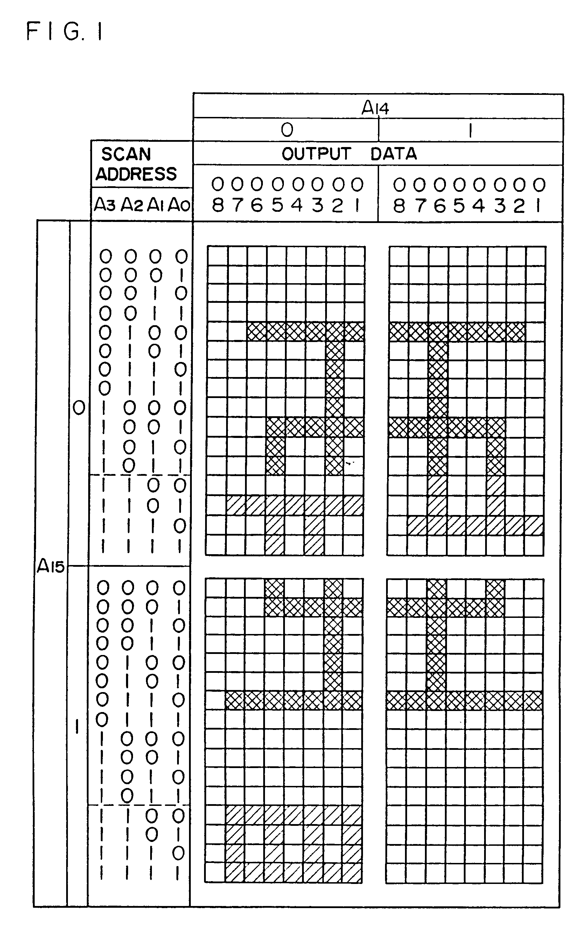

Fig. 1 is a diagram showing a storage example of a character pattern signal into an ROM in an embodiment of the invention. Hitherto, although scan addresses of the Kanji ROM 8 have four bits, to store the pattern signal of an ordinary character, only the areas of the addresses of "0" to "11" (decimal notation) are used. Therefore, in the embodiment, the remaining memory areas of "12" to "15" (decimal notation) are effectively used and the pattern signal of the reduced character is stored at the position of the gap memory area.

The NSZ is stored into the first, second, and third quadrants by reducing 16 x 24 to 8 x 12. The MSZ is stored by reducing 8 x 24 to 4 x 12 in a manner similar to the case of the NSZ. Further, the SSZ is stored by reducing 8 x 12 to 4 x 6. If the upper four bits are used for the MSZ, the lower four bits remain. Therefore, the SSZ is stored here. In the case of the SSZ, two lines of the first and second quadrants are used.

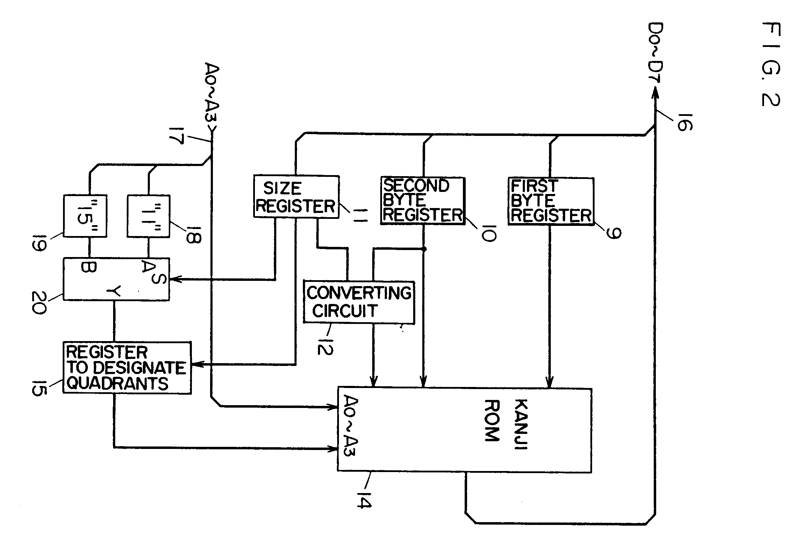

Then, Fig. 2 is a block diagram of the reading circuit.

Reference numeral 9 denotes the register to designate the first byte of the Kanji code; 10 indicates the register to designate the second byte; and 11 represents the register to designate the character size, respectively. A bit to designate the normal mode when the size designation register 11 is set to "0" is added. A bit to designate the reduction mode when the register 11 is set to "1" is added. Reference numeral 12 denotes the address converting circuit according to the character size; 14 indicates the Kanji ROM; 15 a register to designate the quadrant; 16 a data bus; and 17 an address bus. Reference numeral 18 denotes a comparator to output when an address is set to "11"; 19 indicates a comparator to output when an address is set to "15"; and 20 represents a selector to select "11" in the normal mode and "15" in the reduction mode by the size designation register 11, respectively.

The scan addresses in the embodiment are assigned to the address space in the CPU 1 and A₀ to A₃ are given as they are.

The operation in the construction as mentioned above will now be described.

Parameters are set to the registers 9, 10, and 11 by the CPU 1. In the normal mode, the pattern signal of the character of the ordinary size is read out of the areas of addresses "0" to "11". The pattern signal in the first quadrant is read out in this manner. When the scan address reaches "11", "11" is selected by the selector 20 and is output as a count pulse of the quadrant designation register 15. The quadrant is automatically switched. By subsequently reading out the areas of addresses "0" to "11", the Kanji pattern signal of the ordinary character is read out. In the reduction mode, the pattern signal of the reduced character is similarly read out of the areas of addresses "12" to "15". At this time, the comparator 19 has been selected and when the scan address is set to "15", the quadrant is automatically switched.

As mentioned above, according to the embodiment, the pattern signal of the reduced character is arranged and stored at the memory position in the area of the gap in the ROM where the pattern signal of the character of the ordinary size has been stored. Thus, the reduced character can be displayed so as to be easily read without increasing the memory capacity and without changing largely. In addition, the quadrants of the reading circuit can be also automatically switched in a manner similar to the conventional one by adding a simple circuit.

As mentioned above, according to the invention, a simple circuit is added and the reduction pattern signal is stored to the memory position of the gap in the ROM. Therefore, even if the received picture plane of the character multiplexed broadcasting is reduced, it can be displayed so as to be easily read. On the other hand, common use with the conventional reading circuit can be provided and its practical effect is large.

## Claims

1. A character multiplexed broadcasting receiving apparatus comprising: character signal extracting means (4) for extracting a character signal multiplexed for a vertical blanking period of a television signal; pattern generating means for generating a pattern signal of an ordinary or reduced size character corresponding to a character code, the pattern of the ordinary size character having a given format; and display control means (6) for inputting the code of the extracted character signal to said pattern generating means, for processing said code, for writing the generated pattern signal of a character to be displayed into a buffer memory (7), and for reading out and displaying said pattern from said buffer memory; said pattern generating means includes a character memory (8) which is divided into areas comprising 2ⁿ addresses; each of said areas corresponds to a character and is selected by the character code and which is addressed by a sequence of at most n bit scanning addresses in order to display an ordinary size character, characterized in that in order to display the same character in a reduced size the same area of the character memory is addressed by a different sequence of the n bit scanning addresses and in that the character memory is adapted such that the ordinary size character is stored in a portion of a memory area corresponding to more than 2ⁿ⁻¹ scanning addresses and that the same character in a reduced size is stored in the remaining scanning addresses of same area in order to utilize the memory area between the different characters of ordinary size.

2. A character multiplexed broadcasting receiving apparatus according to claim 1, wherein said means for generating the pattern signal corresponding to the character code comprises: means (11) for detecting an end position of the pattern of the character of the ordinary size and for automatically shifting to the next pattern memory position of the same character size.

## Patentansprüche

1. Empfangsgerät für Zeichen-Multiplexübertragungen, umfassend: eine Zeichensignalextrahiereinrichtung (4) zum Extrahieren eines Zeichensignals, das für eine vertikale Austastlücke eines Fernsehsignals multiplexbehandelt wurde; eine MuStererzeugungseinrivhtung zur Erzeugung eines Mustersignals eines Zeichens normaler oder reduzierter Größe gemäß einem Zeichencode, wobei das Muster des Zeichens normaler Größe ein gegebenes Format hat; und eine Anzeigesteuereinrichtung (6) zur Eingabe des Codes des extrahierten Zeichensignals in die Mustererzeugungseinrichtung, zur Verarbeitung des Codes, zum Schreiben des erzeugten Mustersignals eines Zeichens, das angezeigt werden soll, in einen Pufferspeicher (7) und zum Auslesen und Anzeigen des Musters aus dem Pufferspeicher; welche Mustererzeugungseinrichtung einen Zeichenspeicher (8) beinhaltet, der in Bereiche geteilt ist, die 2ⁿ Adressen umfassen; wobei jeder der Bereiche einem Zeichen entspricht und durch den Zeichencode ausgewählt wird und welcher von einer Sequenz von höchstens n Bitabtastadressen adressiert wird, um ein Zeichen normaler Größe anzuzeigen, dadurch gekennzeichnet, daß, um dasselbe Zeichen in einer reduzierten Größe anzuzeigen, derselbe Bereich des Zeichenspeichers von einer unterschiedlichen Sequenz der n Bitabtastadressen adressiert wird, und dadurch, daß der Zeichenspeicher so ausgelegt ist, daß das Zeichen normaler Größe in einem Abschnitt eines Speicherbereiches gespeichert ist, der mehr als 2ⁿ⁻¹ Abtastadressen entspricht, und daß dasselbe Zeichen in einer reduzierten Größe in den verbleibenden Abtastadressen desselben Bereiches gespeichert ist, um den Speicherbereich zwischen den verschiedenen Zeichen normaler Größe zu nutzen.

2. Empfangsgerät für Zeichen-Multiplexübertragungen nach Anspruch 1, bei welchem die Einrichtung zur Erzeugung des Mustersignals entsprechend dem Zeichencode umfaßt: eine Einrichtung (11) zum Erfassen einer Endposition des Musters des Zeichens normaler Größe und zur automatischen Verschiebung zu der nächsten Musterspeicherposition derselben Zeichengröße.

## Revendications

1. Appareil récepteur de radiodiffusion à multiplexage des caractères, comprenant: un moyen (4) d'extraction de signal de caractères pour extraire un signal de caractère multiplexé pendant une période de suppression de trame d'un signal de télévision; un moyen générateur de mire pour générer un signal de mire de caractère de dimension ordinaire ou réduite correspondant à un code de caractères, la mire de caractères de dimension ordinaire ayant un format donné; et un moyen (6) de commande d'affichage pour introduire ie code du signal de caractère extrait dans ledit moyen générateur de mire, pour traiter ledit code, pour écrire le signal de mire généré d'un caractère à afficher dans une mémoire tampon (7), et pour extraire ladite mire de ladite mémoire tampon et l'afficher; ledit moyen générateur de mire contenant une mémoire de caractères (8) qui est divisée en zones comprenant 2ⁿ adresses; chacune desdites zones correspondant à un caractère, étant sélectionnée par le code de caractères et étant adressée par une séquence d'adresses de balayage à n bits au maximum pour l'affichage d'un caractère de dimension ordinaire; caractérisé en ce qu'afin d'afficher le même caractère avec une dimension réduite, la même zone de la mémoire de caractères est adressée par une séquence différente des adresses de balayage à n bits, et en ce que la mémoire de caractères est adaptée de telle manière que le caractère de dimension ordinaire est mémorisé dans une partie d'une zone de mémoire correspondant à plus de 2ⁿ⁻¹ adresses de balayage et que le même caractère en dimension réduite est mémorisé aux adresses de balayage restantes de la même zone, afin d'utiliser la zone de mémoire entre les différents caractères de dimension ordinaire.

2. Appareil récepteur de radiodiffusion à multiplexage des caractères selon la revendication 1, dans lequel ledit moyen pour générer le signal de mire correspondant au code de caractères comprend: un moyen (11) pour détecter une position finale de la mire des caractères de dimension ordinaire et pour passer automatiquement, à la position en mémoire de la mire suivante de la même dimension de caractères.
